# EUROPÄISCHE PATENTSCHRIFT

(11) **EP 0 916 535 B1**
(45) Veröffentlichungstag und Bekanntmachung des Hinweises auf die Patenterteilung: **25.06.2003**
(21) Anmeldenummer: 98890280.5
(22) Anmeldetag: 02.10.1998
(51) Int. Cl.: B60J 7/20

(54) **Anordnung und Verfahren zur hydraulischen Betätigung beweglicher Teile**
Device and method for hydraulically operating moving parts
Dispositif et procédé pour l'actionnement hydraulique des parts mobiles

(30) Priorität: 12.11.1997 AT 191897
(43) Veröffentlichungstag der Anmeldung: 19.05.1999
(73) Patentinhaber: Hoerbiger Hydraulik GmbH, 86956 Schongau (DE)
(72) Erfinder: Stolle, Klaus, Dipl.-Ing., 86972 Schwabniederhofen (DE)
(74) Vertreter: Laminger, Norbert, Mag.

(56) Entgegenhaltungen:
- DE-A- 19 523 784
- DE-A- 19 629 065
- US-A- 5 138 838

## Beschreibung

Die Erfindung betrifft eine hydraulische Betätigungsanordnung für bewegliche Teile, insbesondere für verschwenkbare Klappen an Fahrzeugen, mit zumindest einem Arbeitszylinder mit einem an der Zylinderinnenwand dichtend anliegenden Kolben, einer mit dem oder jedem Arbeitszylinder verbundenen Steuereinheit und einem mit der Steuereinheit verbundenen Drucksensor in einem gemeinsamen Druckkreis, wobei die entsprechend entsprechend dem Druckverlauf im System veränderten Ausgangssignale des Drucksensors in der Steuereinheit zur Stellungskontrolle des oder jedes Arbeitszylinders dienen, sowie Fahrzeugverdecksystem mit einem vorzugsweise mehrteiligen Rahmenaufbau und einer allfälligen Abdeckklappe und zumindest einem Arbeitszylinder zur relativen Bewegung des Rahmenaufbaus und der Abdeckklappe gegenüber dem Fahrzeug bzw. zur relativen Bewegung dieser Teile gegeneinander, und Verfahren zur Stellungskontrolle und/oder Identifizierung eines Arbeitszylinders in einer hydraulischen Betätigungsanordnung für bewegliche Teile, insbesondere für verschwenkbare Klappen an Fahrzeugen, bei welchem der Druck im Druckkreis mit einem Drucksensor ermittelt und ein entsprechendes Signal einer Steuereinheit zur Auswertung zugeleitet wird.

Aus der AT-C-402 280 bzw. DE-A-1 96 29 065 ist eine hydraulische Betätigungsanordnung für ein Fahrzeugverdeck bekannt, bei der im gemeinsamen Druckkreis der Arbeitszylinder ein Drucksensor eingeschaltet ist, der mit einer Steuereinheit für die separaten Schaltelemente der Arbeitszylinder in Verbindung steht und dessen Ausgangssignal über der Zeit zusammen mit einer festen Schaltfolge der einzelnen Schaltelemente zur Endstellungskontrolle der einzelnen Arbeitszylinder dient. Damit kann zwar ohne aufwendige, separate Endlagenschalter an jedem Arbeitszylinder oder zugeordnetem Teil des Verdecksystems die Steuerung der Gesamtanordnung vereinfacht werden, wobei aber die Zylinder nur in einer vorgegebenen Reihenfolge geschaltet werden können und Änderungen der Schaltreihenfolge eine Neufassung des gesamten Steuerprogramms notwendig machen. Überdies ist keine Möglichkeit gegeben, Zwischenstellungen der Arbeitszylinder zu erkennen und so einfach zum Beispiel auch Überschneidungen in den Bewegungen bzw. mit externen Vorgängen vorsehen zu können.

Es ist daher die Aufgabe der vorliegenden Erfindung, eine hydraulische Betätigungsanordnung für prinzipiell beliebige Anwendungszwecke zu schaffen, die bei größtmöglicher Einfachheit die oben genannten Nachteile vermeidet und mit einer hinsichtlich Herstellung, Montage und Wartung kostengünstigen Bauweise eine flexibel programmierbare Steuerung sowie zeitsparende Überschneidungen oder parallel verlaufende Arbeitszyklen der Arbeitszylinder der Betätigungsanordnung ermöglicht. Weitere Aufgaben der Erfindung waren ein Fahrzeugverdecksystem, welches ebenfalls die soeben genannten Eigenschaften aufweist und ein mit einer einfachen, kostengünstigen und funktionssicheren Anlage durchführbares Verfahren zur Stellungskontrolle und/oder Identifizierung eines Arbeitszylinders in einer hydraulischen Betätigungsanordnung.

Die erste Aufgabe wird erfindungsgemäß dadurch gelöst, daß Einrichtungen zum Bewirken einer Modulierung des Druckes im Arbeitszylinder vorhanden sind und die entsprechend der Druckmodulierung veränderten Ausgangssignale des Drucksensors der Steuereinheit zuleitbar sind und zur Stellungskontrolle und/oder Identifizierung des oder jedes Arbeitszylinders durch die Steuereinheit dienen. Die besagte Druckmodulierung überlagert sich dem allgemeinen abiaufgemäßen Druckverlauf des Systems und kann durch die Steuereinheit leicht identifiziert werden. Je nach Bedarf kann jeder beliebige Abschnitt im Verlauf des Arbeitshubs des Kolbens auf die beschriebene Weise gekennzeichnet werden, d.h. auch Positionen zwischen den Endstellungen, so daß ohne großen Aufwand für zusätzliche Stellungssensören eine Rückmeldung und nachfolgende Aktionen bereits bei Erreichen von Zwischenstellungen des Arbeitszylinders ermöglicht sind. Das macht aber auch die Herstellung und Montage der Betätigungsanordnung bei beliebigen Anwendungen kostengünstiger, einfacher und weniger fehleranfällig, da keinerlei separate Stellungssensoren und insgesamt weniger Bauteile, Kabel und Stecker montiert bzw. verlegt werden müssen. Die Steuereinheit kann mit weniger Eingängen des Auslangen finden und schließlich ist durch die ständige Druck-überwachung auch die Sicherheit bedeutend erhöht. Selbstverständlich kann die Druckmodulierung auch ein individualisierbares Signal für die Betätigung des jeweiligen Zylinders liefern.

Die oben genannten Vorteile werden noch vergrößert, wenn mehrere, über separate Schaltelemente ansteuerbare Arbeitszylinder im Druckkreis mit der (Fortsetzung auf Seite 3) Steuereinheit und dem Drucksensor vorgesehen sind. In diesem Fall können die aufeinanderfolgenden Arbeitszyklen der separaten Zylinder flexibler gestaltet werden und ein in der Arbeitsabfolge nachfolgend zu betätigender Arbeitszylinder schon wirksam werden, wenn der vorausgehende Arbeitszylinder noch in einer Zwischenstellung ist. Trotzdem bleibt die erfindungsgemäße Betätigungsanordnung baulich sehr einfach und kostengünstig und enthält weiterhin nur einen Drucksensor und eine Steuereinheit, die sehr einfach und wirtschaftlich ausgeführt sein können.

Zusätzlich oder alternativ zur Stellungskontrolle kann in Systemen mit mehreren Arbeitszylindern zur Ermöglichung von deren individualisierter Kennzeichnung vorgesehen sein, daß zumindest ein Arbeitszylinder mit Einrichtungen zur Druckmodulierung für eine diesen Arbeitszylinder aufgrund der speziellen Form der Druckmodulierung charakterisierenden Kennzeichnung ausgestattet ist. Durch dieses Merkmal ist eine individuelle Erkennung jedes einzelnen Arbeitszylinders oder jeder Gruppe von zugleich zu betätigenden Arbeitszylindern realisierbar, sodaß auch die sich überschneidende oder parallele Ansteuerung mehrerer Zylinder oder Zylindergruppen in einfacher Weise möglich ist. Die Kennzeichnung der einzelnen Zylinder kann durch die Größe und/oder das Vorzeichen der Druckveränderung erfolgen, wobei erstere Variante natürlich von der Auflösung des eingesetzten Drucksensors abhängt und sich auch allgemeine Druckschwankungen störend auswirken könnten. Bevorzugt ist daher eine Kennzeichnung in Art eines "Strichcodes", wobei der jeweilige Zylinder bzw. die jeweilige Zylindergruppe durch eine charakteristische Abfolge von Druckschwankungen (Abweichungen vom normalen Druckverlauf gemäß der jeweiligen Stellung des Kolbens) gekennzeichnet ist, unabhängig von deren absoluter Größe, allenfalls noch unter Einbeziehung des Vorzeichens der Druckänderung. Auch ist die Steuereinheit flexibler programmierbar, da, wenn es erwünscht ist, daß die Arbeitszylinder in anderer Reihenfolge angesteuert werden, nicht das gesamte Programm neu geschrieben werden muß, sondern nur die Codes für die Zylinderkennzeichnungen ausgetauscht werden müssen.

Gemäß einer weiteren Ausführungsform der Erfindung sind die Einrichtungen zur Druckmodulierung durch zumindest einen Abschnitt mit einer gegenüber anderen Abschnitten betragsmäßig abweichenden Querschnittsfläche an zumindest einem von zwei während des Hubes des Kolbens aneinander vorbeibewegten und einander berührenden Teile des Arbeitszylinders gebildet. Diese Ausführung vermeidet zusätzliche Bauteile an den Arbeitszylindern und verringert somit den konstruktiven Aufwand, die Herstellung und Montage und auch die Funktionssicherheit aufgrund einer geringeren Anzahl störungsanfälliger Bauteile.

In einer ersten vorteilhaften Ausführungsform der Erfindung ist die Abweichung der Querschnittsfläche durch eine vorzugsweise über den gesamten Umfang des Zylinderrohres und/oder einer allfälligen Kolbenstange umlaufende Einbuchtung in diese Teile gegeben und der Kolben mit einer am Zylinderrohr anliegenden Dichtung bzw. die Durchführung der Kolbenstange mit einer an der Kolbenstange anliegenden Dichtung versehen ist. An der Stelle mit der abweichenden Querschnittsfläche, wobei es hier nur auf den absoluten Wert der Querschnittsfläche ankommt, wird sich die elastische Dichtung des Kolbens oder auch der Kolbenstange unter Beibehaltung ihrer Dichtwirkung ausdehnen und damit dem Kolben des Arbeitszylinders ein leichteres Verschieben ermöglicht. Resultierend aus dieser Querschnittsvergrößerung wird ein Druckabfall im Druckkreis auftreten, der ein entsprechendes Ausgangssignal des Drucksensors hervorruft, wenn der Kolben den Abschnitt mit der abweichenden Querschnittsfläche passiert. Der besagte kurzfristige Druckabfall ergibt also die durch die Steuereinheit verarbeitbare Druckmodulierung, durch welche das Passieren des Abschnittes des Zylinders mit der Querschnittserweiterung bzw. das Tätigwerden des Zylinders mit dieser Querschnittserweiterung erkennbar ist.

Gemäß einer speziellen Ausführungsform weist dabei die Einbuchtung in das Zylinderrohr in Richtung des Hubes des Kolbens eine Länge auf, die größer ist als die dichtend wirksame Länge des Kolbens. Dies bewirkt einen Strom des Druckfluids in den Raum hinter dem Kolben, der mit einem Druckabfall einhergeht. Durch den ausreichenden Volumenstrom wird der Kolben aber trotz des Druckabfalls weiterbewegt und gelangt schnell wieder in einen Abschnitt, in dem der Kolben wieder dicht abschließt und sich der Druck somit wieder auf den ablaufgemäßen Systemdruck einstellt. Der kurzfristige Druckabfall bei Passieren des Abschnittes mit der abweichenden Querschnittsfläche wirkt sich als dem ablaufgemäßen Druckverlauf aufgeprägte Modulierung aus und ist somit von der Steuereinheit erkennbar.

Alternativ zu der oben beschriebenen Ausführungsform kann auch vorgesehen sein, daß die Abweichung der Querschnittsfläche durch eine vorzugsweise über den gesamten Umfang des Zylinderrohres und/oder einer allfälligen Kolbenstange umlaufende Ausbuchtung von diesen Teilen weg gegeben und der Kolben mit einer am Zylinderrohr anliegenden Dichtung bzw. die Durchführung der Kolbenstange mit einer an der Kolbenstange anliegenden Dichtung versehen ist. Unter sinngemäßer Umkehrung der oben erläuterten Vorgänge ereignet sich bei dieser, in der Herstellung meist einfacheren Ausführungsform ein kurzfristiger Druckanstieg, der sich als Druckspitze über dem ablaufgemäßen Druck im Druckkreis bemerkbar macht.

Eine wieder andere Ausführungsform gemäß der Erfindung ist dadurch gegeben, daß die Abweichung der Querschnittsfläche durch zumindest eine Bohrung im Zylinderrohr und/oder einer allfälligen Kolbenstange gegeben ist, in welche Bohrung allenfalls ein Stopfen verstellbar und fixierbar einsetzbar ist und daß der Kolben mit einer am Zylinderrohr anliegenden Dichtung bzw. die Durchführung der Kolbenstange mit einer an der Kolbenstange anliegenden Dichtung versehen ist. Die Größe der Veränderung der Querschnittsfläche des Arbeitszylinders ist durch Einsetzen oder Herausnehmen des Stopfens oder zum Beispiel durch ein unterschiedlich weites Hinein- oder Herausschrauben veränderlich und es kann sogar eine Umkehrung des Vorzeichens der Druckänderung bewerkstelligt werden, wenn etwa eine Schraube soweit in eine Bohrung in der Zylinderinnenwand hineingeschraubt wird, daß sie eine zuerst in den Zylinderinnenraum hin offene Ausnehmung schließt und schließlich vielleicht sogar die Innenwandung überragt und eine Querschnittsverengung bildet oder umgekehrt. Die besagte Bohrung könnte auch, speziell im Zylinderrohr, einer Auslaß- oder Bypassleitung zugeordnet sein, welche nach Passieren des Kolbens von diesem freigegeben wird, um kurzfristig Druckfluid aus dem Zylinder abzuleiten und derart einen kurzfristigen Druckabfall als Modulierung des ablaufgemäßen Drucks im Druckkreis hervorzurufen, der der Steuereinheit als Stellungssignal oder Erkennungssignal dieses Arbeitszylinders dient.

Gemäß einer weiteren Ausführungsform der Erfindung ist vorgesehen, daß die Einrichtungen zur Druckmodulierung durch zumindest ein, von den Baueilen für den hydraulischen Betrieb der Arbeitszylinder separates Element, vorzugsweise am Arbeitszylinder, am Kolben oder der allfälligen Kolbenstange, gebildet sind. Damit wird die hydraulische Wirkung des Arbeitszylinders trotz er vorteilhaften Identifizierungs- und/oder Stellungskontrollmöglichkeit nicht oder nur unwesentlich beeinflußt.

Vorzugsweise ist dabei das separate Element zur Druckmodulierung durch zumindest ein mechanisches Element gebildet, das in zumindest einem Abschnitt des Hubes des Kolbens im Arbeitszylinder mit zumindest einem vorbeibewegten anderen mechanischen Element und/oder einem speziell ausgebildeten Bereich einer am ersten mechanischen Element anliegenden und vorbeibewegten Fläche zusammenwirkt. Diese mechanische Ausführungsform ist baulich und herstellungsmäßig aufgrund ihrer Einfachheit sehr vorteilhaft und ist auch im Betrieb funktionssicher.

Um eine einfach und mit bewährten herkömmlichen Bauelementen leicht herzustellende mechanische Ausführungsform zu realisieren, ist vorgesehen, daß das separate Element zumindest ein gegen das vorbeibewegte Element oder die vorbeibewegte Fläche vorgespanntes Bauteil ist, das in zumindest einem Abschnitt des Hubes des Kolbens mit zumindest einer betragsmäßig abweichenden Querschnittsfläche und/oder einer die Relativbewegung beeinflussenden Oberflächenstruktur zusammenwirkt, derart die Kolbenbewegung erleichtert oder erschwert und somit die Druckmodulierung bewerkstelligt.

Zur einfachen Überwachung der Kolbenposition und zur Ermittlung von Zwischenstellungen ist eine vorteilhafte Ausführungsform dadurch gekennzeichnet, daß die Zylinderwandung und/oder eine allfällige Kolbenstange über ihre Länge in regelmäßigen Abständen mit den Einrichtungen zur Druckmodulierung versehen ist. Damit kann durch einen einfach zu realisierenden Zähler in der Steuereinheit die Kolbenstellung durch Mitzählen der aufgetretenden Druckschwankungen ermittelt und für die weitere Schaltabfolge berücksichtigt werden. Ein Zähler kann in der Steuereinheit, falls er nicht schon vorhanden sein sollte, in einfacher Weise realisiert werden. Wenn allenfalls noch die einzelnen Druckschwankungen "codiert" sind, durch den Absolutwert, eine zeitlich definierte Abfolge von Schwankungen od. dgl. können in sehr genauer Weise für jeden im System befindlichen Arbeitszylinder End- und Zwischenstellungen mit nur einem Drucksensor ermittelt und für die Weiterverarbeitung in der Steuereinheit bereitgestellt werden.

In einer bevorzugten Ausführungsform der Erfindung ist vorgesehen, daß zur Überwachung und Auswertung des Druckverlaufes in der Steuereinheit ein Rechner vorgesehen ist, der allenfalls auch die Schaltfolgen der Schaltelemente bei mehreren Arbeitszylindern steuert. Damit kann die Überwachung des Druckverlaufes, die allfällige Identifizierung der Arbeitszylinder und die Umsetzung der Drucksignale in eine Auslösung von Schaltfolgen sehr einfach vorgenommen werden, wobei auch Änderungen zur Anpassung an geänderte Gegebenheiten leicht möglich sind.

Besonders vorteilhaft ist weiters eine Ausführungsform der Betätigungsanordnung, bei der vorgesehen ist, daß zumindest ein Temperatursensor, vorzugsweise am oder zumindest in der Nähe des Druckkreises, vorgesehen ist, der ebenfalls mit der Steuereinheit in Verbindung steht und über den die Temperaturabhängigkeit der Betätigungsanordnung berücksichtigbar ist. Da die Zeitdauer der Verstellung des jeweiligen Arbeitszylinders zwischen den unterschiedlichen End- bzw. Zwischenstellungen vom hydraulischen Volumenstrom abhängt und dieser von der Temperatur, kann auf diese Weise eine einfache Kompensation vorgenommen und können zwei voneinander unabhängige Parameter erhalten werden, mit denen die Steuerung des Betätigungsablaufes sicher durchgeführt werden kann.

Die zweite Aufgabe wird durch ein erfindungsgemäßes Fahrzeugverdecksystem mit einem vorzugsweise mehrteiligen Rahmenaufbau und einer allfälligen Abdeckklappe und zumindest einem Arbeitszylinder zur relativen Bewegung des Rahmenaufbaus und allenfalls der Abdeckklappe gegenüber dem Fahrzeug bzw. zur relativen Bewegung dieser Teile gegeneinander, gelöst, welche dadurch gekennzeichnet ist, daß der zumindest eine Arbeitszylinder Teil einer Betätigungsanordnung nach einem der vorhergehenden Absätze ist. Alle der genannte Vorteile treffen auch bei der Anwendung der Betätigungsanordnung zum Aus- und Einfahren eines Fahrzeugverdecks zu, bei dem die Möglichkeit der Überschneidung von Arbeitszyklen verschiedener Arbeitszylinder einen rascheren Ablauf des Aus- und Einfahrens mit einer sehr einfachen, wirtschaftlichen und funktionssicheren Anordnung ermöglicht. Darüberhinaus ist eine genauere Überwachung des Vorganges gewährleistet und eventuell auftretende Fehlfunktionen können schneller diagnostiziert und behoben werden, da auch wichtige Zwischenstellungen der Arbeitszylinder in die Systemüberwachung miteinbezogen sind.

Selbstverständlich können in allen der oben genannten Fälle allenfalls zusätzlich und bedarfsweise Sicherheitsschalter, Endschalter od. dgl. vorgesehen sein, die den jeweiligen Vorgang zusätzlich oder separat überwachen.

Zur Lösung der erfindungsgemäßen Aufgabenstellung ist auch ein Verfahren zur Stellungskontrolle und/oder Identifizierung eines Arbeitszylinders in einer hydraulischen Betätigungsanordnung vorgesehen, bei welchem der Druck im Druckkreis mit einem Drucksensor ermittelt und ein entsprechendes Signal einer Steuereinheit zur Auswertung zugeleitet wird, und welches dadurch gekennzeichnet ist, daß der Druck im Druckkreis bei Passieren eines vorbesimmten Abschnittes entlang des Hubes des Kolbens in einer diese Stellung und/oder den jeweiligen Zylinder charakterisierenden Weise moduliert wird, daß ein dieser Druckmodulation entsprechendes Signal erzeugt und der Steuereinheit der Betätigungsanordnung zur Auswertung zugeleitet wird.

In einer vorteilhaften Ausführungsform ist weiters vorgesehen, daß der Druck im Druckkreis bei Passieren des vorbestimmten Abschnittes durch Veränderung des Widerstandes der Kolbenbewegung moduliert wird.

Eine alternative Ausführungsform sieht vor, daß der Druck im Druckkreis bei Passieren des vorbestimmten Abschnittes durch Ableiten eines Teils des Druckfluids, vorzugsweise ein zumindest kurzfristiges Verbinden der Räume vor und hinter dem Kolben, moduliert wird.

Die Erfindung wird zusammen mit weiteren Merkmalen und Vorteilen im folgenden und anhand der beigefügten Zeichnungen noch näher erläutert. Dabei zeigt Fig. 1 ein schematisches Schaltschema einer hydraulischen Betätigungsanordnung mit vier Arbeitszylindern, Fig. 2 ist ein Ausschnitt aus einem zugehörigen Druckdiagramm, Fig. 3 zeigt eine teilweise Schnittansicht eines der Arbeitszylinder in einer erfindungsgemäßen Ausführungsform, Fig. zeigt ein Druckdiagramm, wie es sich mit einem erfindungsgemäßen Arbeitszylinder ergibt, Fig. 5 bis 7 zeigen andere Ausführungsformen für die Zylinderwandung und Fig. 8 zeigt in schematischer Darstellung ein Auto mit Faltverdeck, bei dem die erfindungsgemäße Betätigungsanordnung vorgesehen ist.

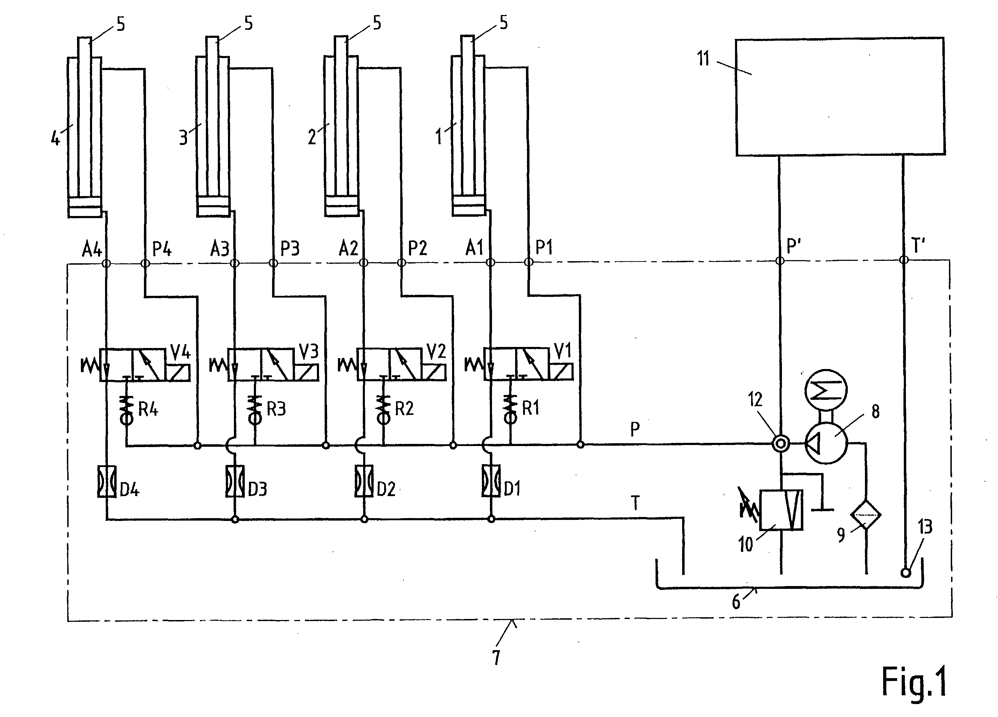

In Fig. 1 sind vier Arbeitszylinder 1 bis 4 dargestellt, die beispielsweise zur Betätigung eines Fahrzeugverdecks oder anderer mechanischer Systeme dienen können, indem deren Kolbenstangen 5 mit weiteren Betätigungselementen, Sperrelementen, Hebeln od. dgl. auf nicht näher dargestellte Weise in Verbindung stehen. Selbstverständlich können auch zusätzliche Elemente wie Endschalter, Sicherheitsschalter od. dgl. vorgesehen sein. Die Zylinder 1 bis 4 sind über Anschlüsse A1 bis A4 und weiter über separate Schaltelemente V1 bis V4 mit einem gemeinsamen Druckkreis P (Anschlüsse P1 bis P4) bzw. über separate Drosseln D1 bis D4 mit der Leitung T zum Tank 6 des Druckfluids verbunden. Auch beispielsweise federbelastete und elektrisch betätigte Rückschläge R1 bis R4 sind in der Verbindung vom Druckkreis P zu den Schaltelementen V1 bis V4 vorgesehen. Dabei sind die Schaltelemente, Rückschläge und Drosseln, vorzugsweise auch noch die Druckpumpe 8 samt Filter 9 sowie Druckbegrenzungsventil 10 vorteilhafterweise in einem in Fig. 1 strichpunktiert angedeuteten Aggregatblock 7 angeordnet.

Am Aggregatblock 7 sind mit P' und T' (letzterer nicht zwingend) bezeichnete Ausgänge zu einer externen Steuereinheit 11 vorhanden, über welche Ausgänge das Signal eines im Druckkreis P eingeschalteten Drucksensors 12 (Ausgang P') und vorteilhafterweise eines Temperatursensors 13 (Ausgang T'), hier beispielsweise im Tank 6 angeordnet, zur Steuereinheit 11 geleitet werden, welche auf nicht näher dargestellte Weise mit den elektrischen Betätigungselementen der Schaltelemente V1 bis V4 in Verbindung steht. Die Steuereinheit 11 ist mit einem vorzugsweise programmierbaren Rechner ausgerüstet, der den Druckverlauf und allenfalls die Temperatur (temperaturabhängige Kennlinie der Betätigungsanordnung) überwacht und auswertet und auch die Schaltfolge der Schaltelemente V1 bis V4 steuert.

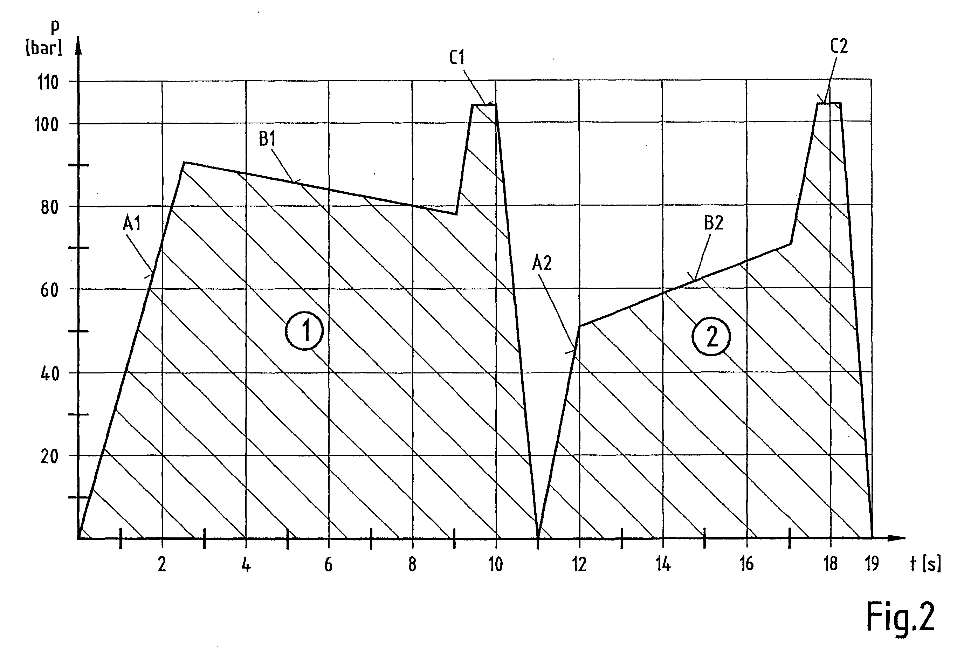

Unter Bezugnahme auf Fig. 2 soll nun der prinzipielle Druckverlauf während eines Arbeitszyklus eines Arbeitszylinders 1 bis 4 - noch ohne Berücksichtigung der Verbesserungen gemäß der vorliegenden Erfindungbeschrieben werden, der in bekannter Weise bereits zum Erkennen des Hubendes bzw. der Endposition herangezogen werden kann. Zu Beginn sind die Kolbenstangen 5 aller Arbeitszylinder 1 bis 4 eingefahren und die Schaltelemente V1 bis V4 nicht bestromt. Es wird nun der Aggregatblock 7 bzw. dessen Druckpumpe 8 eingeschaltet und das Schaltelement V1 betätigt, worauf der Arbeitszylinder 1 ausfährt. Der Drucksensor 12 übermittelt den Ist-Druckverlauf im Druckkreis P an die Steuereinheit 11, in deren Rechner er ausgewertet und mit einem vom Ablauf her bekannten Soll-Druckverlauf verglichen wird. Wie in Fig. 2 zu sehen ist, baut sich der Druck im Arbeitszylinder 1 in einer ersten Phase auf (Anstieg A1 bzw. A2), bis sich die Kolbenstange 5 zu bewegen beginnt, der Arbeitszylinder ausfährt und der Druck je nach Belastung wie im Abschnitt B1 oder B2 (für einen zweiten, nachfolgend betätigten Arbeitszylinder 2) verläuft. Bei Erreichen der Endstellung bzw. des Hubendes steigt der Druck soweit an, bis er das über das Druckbegrenzungsventil 10 vorgegebene Niveau C1 bzw. C2 erreicht hat. Die Steuerung 11 kann anhand dieses Druckverlaufes die Endstellung des jeweils betätigten Arbeitszylinders erkennen. Wie durch die Kurve (2) angedeutet, ist allein durch den einen Drucksensor 12 eine Endstellungsüberwachung bei nacheinander betätigten Arbeitszylindern möglich.

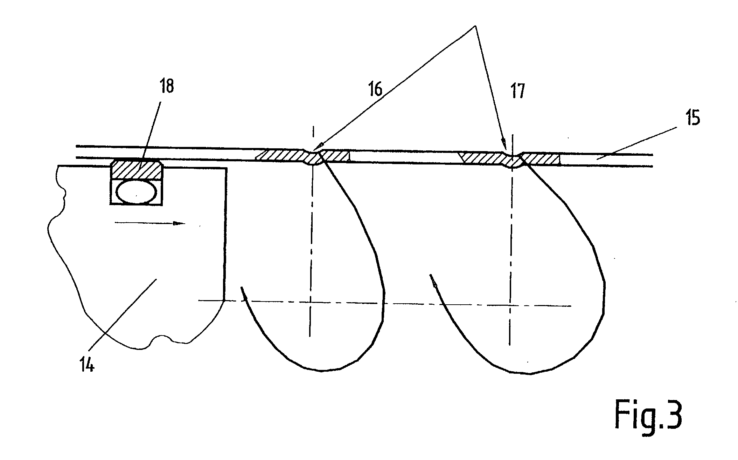

Gemäß einer beispielhaften Ausführungsform der Erfindung sind nun bestimmte oder alle Arbeitszylinder 1 bis 4 entlang des vom Kolben 14 während seines Arbeitshubs durchlaufenen Weges derart ausgebildet, daß zumindest ein Abschnitt mit einer gegenüber anderen Abschnitten abweichenden Querschnittsfläche vorgesehen ist. In der in Fig. 3 dargestellten ersten bevorzugten Ausführungsform ist dazu das Zylinderrohr 15 des Arbeitszylinders 1 bis 4 durch eine Einbuchtung auf die Mittelachse des Zylinders hin verformt (bei 16 und 17), vorzugsweise nicht nur an einer oder mehreren diskret entlang des Umfangs verteilten Stellen, sondern umlaufend über den gesamten Umfang. Wenn sich nun der Kolben 14 in Fig. 3 unter dem Einfluß des Hydraulikfluid in Pfeilrichtung bewegt, wird seine Kolbendichtung 18 bei Erreichen des ersten ausgebuchteten Abschnittes (bei 16) mit unterschiedlicher Querschnittsfläche plastisch verformt und der Kolben 14 etwas gebremst, was zu einem Druckanstieg führt, der den Kolben 14 schließlich über die Verformung hinweg und am Abschnitt 16 vorbeidrückt, wonach der Druck dann wieder auf das ablaufgemäße Niveau absinkt. Die Verformung der Dichtung 18 geht wieder zurück und die Bewegung des Kolbens 14 erfolgt wieder entsprechend dem ablaufgemäßen Druck im Arbeitszylinder. Das Durchlaufen des Abschnittes 16 mit der Verformung des Zylinderrohres 15 macht sich also in einem kurzen Druckanstieg, einer Druckspitze, bemerkbar, welche über den Drucksensor 12 auch der Steuerung 11 mitgeteilt wird und als Signal für das Erreichen der jeweiligen Stellung durch den Kolben dienen kann. Der gleiche Vorgang wiederholt sich beim Beispiel der Fig. 3 auch im zweiten Abschnitt mit gegenüber dem Standardquerschnitt abweichendem Querschnitt des Arbeitszylinders (mit dem verformten Abschnitt 17) und zeigt dann der Steuerung 11 an, daß der Kolben 14 diesen zweiten Abschnitt erreicht bzw. durchlaufen hat. Auf diese Weise kann also durch die Schaffung von Abschnitten im Arbeitszylinder, die gegenüber der normalen Querschnittsfläche eine unterschiedliche Querschnittsfläche aufweisen, eine charakteristische Druckmodulierung im Druckkreis P hervorgerufen werden und können die korrespondierenden Ausgangssignale des Drucksensors 12 zur Stellungskontrolle des jeweiligen Arbeitszylinders 1 bis 4 dienen.

Wenn einzelne Arbeitszylinder eine sich von allen anderen Arbeitszylindern unterscheidende Abfolge von Abschnitten mit abweichender Querschnittsfläche aufweisen, ähnlich einem "Strichcode", ist damit eine sichere Identifizierung des jeweiligen Arbeitszylinders und beispielsweise durch die Steuereinheit 11 eine Kontrolle möglich, ob auch der ablaufgemäß vorgesehene Zylinder tatsächlich die jeweilige Position passiert hat. Selbstverständlich können die beiden beschriebenen Varianten auch in Kombination vorgesehen werden, sodaß entlang des Arbeitshubs der Kolben aller Zylinder Abschnitte mit unterschiedlicher Querschnittsfläche vorgesehen sind, die alle für den Ablauf des Gesamtsystems wichtigen Zwischenstellungen kennzeichnen und wobei alle Abschnitte jedes einzelnen Zylinders mit einer diesen Zylinder eindeutig charakterisierenden Abfolge von Verformungen innerhalb jedes derartigen Abschnitts versehen sind.

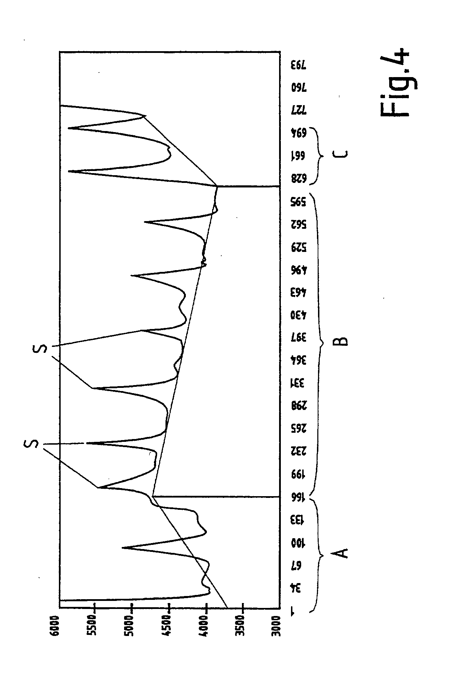

Fig. 4 zeigt für eine einfache andere Ausführungsform eines erfindungsgemäßen Arbeitszylinders einen Ausschnitt aus dem Druckdiagramm. Die Zylinderwandung ist dabei ähnlich der Fig. 3 über den gesamten Arbeitshub des Kolbens in gleichen Abständen mit Verformungen nach innen hin versehen, welche die Abschnitte mit betragsmäßig abweichender Querschnittsfläche bilden. Im Abschnitt A ist ein im Schnitt gesehen ansteigender Systemdruck zu erkennen, der dann in den Abschnitt B mit langsam im Mittel sinkenden Druck übergeht. Bei jedem Durchlaufen eines Abschnittes mit der die Querschnittsfläche des Zylinders vermindernden Verformung kommt es zur Ausbildung einer Druckspitze S im Druckkreis P. Ein in der Steuereinheit vorgesehener Rechner kann gemäß einer weiteren Ausführungsvariante diese Druckspitzen mitzählen und liefert derart eine relativ genaue Information über die jeweilige Stellung des Kolbens 14. Wenn diese Druckspitzen S für jeden Arbeitszylinder im System noch spezielle Charakteristika aufweisen, etwa unterschiedliche relative Höhen der Spitzen od. dgl., könnte die Steuereinheit daran auch noch die Betätigung des jeweiligen Zylinders erkennen.

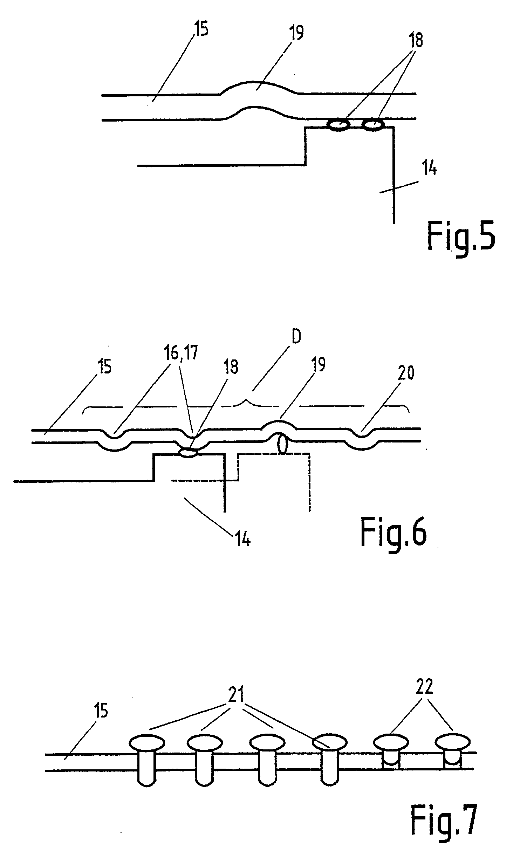

In den Fig. 5 bis 7 sind beispielhaft andere mögliche Ausführungsformen für Abschnitte mit unterschiedlicher Querschnittsfläche in Arbeitszylindern dargestellt. So kann anstelle einer Ausbuchtung des Zylinderrohres 15 nach innen hin (wie in Fig. 3 gezeigt) auch eine Einbuchtung 19 radial nach außen hin vorgesehen sein, sodaß sich beim Durchlaufen des entsprechenden Abschnittes durch den Kolben 14 dessen Kolbendichtung 18 ausdehnt, der Kolben sich kurzfristig schneller bewegt und sich somit ein Druckabfall anstelle eines Druckanstiegs einstellt. Anstelle von über den normalen ablaufgemäßen Druck hinausgehenden Druckspitzen liefert eine derartige Ausführungsform kurzfristige Druckeinbrüche, die aber genausogut in der Steuereinheit 11 als Signale über die jeweilige Kolbenstellung herangezogen werden können, vom Rechner mitgezählt bzw. auf die gleiche Weise verwertet werden können wie die Druckspitzen der Fig. 4. Eine noch größere Flexibilität und viel mehr Möglichkeiten zur Codierung von Positionen oder separaten Arbeitszylindern ist bei der in Fig. 6 dargestellten Ausführungsform der Zylinderwandung 15 gegeben, bei der eine Kombination von ausgebuchteten Abschnitten 16, 17 und 20 des Zylinderrohres 15 radial nach innen und Abschnitten 19 mit Einbuchtungen radial nach außen hin vorgesehen ist. Bei Durchlaufen des Abschnittes D mit seinen beiden vorgewölbten Abschnitten 16, 17, dem nachfolgenden eingebuchteten Abschnitt 19 und dem abschließenden wieder vorgewölbten Abschnitt 20 ergibt sich im Druckkreis P ein für diesen Abschnitt D und/oder den jeweiligen Zylinder ganz charakteristisches Druckschwankungsmuster, welches der Steuerung signalisiert, daß der Kolben 14 des gerade aktiven Zylinders gerade diesen Abschnitt D durchlaufen hat bzw. daß der Kolben 14 des durch dieses Druckschwankungsmuster gekennzeichneten Zylinders gerade seine für den weiteren Gesamtablauf wichtige Zwischenstellung durchlaufen hat.

Eine Veränderung des Druckschwankungsmusters ist bei einer Ausführungsform möglich, wie sie beispielhaft in Fig. 7 gezeigt ist. Hier sind in der Zylinderwand 15 Bohrungen vorhanden, in die Stopfen 21, 22 unterschiedlich weit einsetzbar und fixierbar sind. Vorzugsweise sind die Stopfen 21, 22 in Gewindebohrungen im Zylinderrohr 15 einschraubbar, wobei sich in einer weiteren Ausgestaltung der Erfindung unterschiedliche Konfigurationen einstellen lassen. So sind im Beispiel der Fig. 7 die ersten vier Stopfen 21 so weit hineingeschraubt, daß sie in das Innere des Zylinders hineinragen, Verkleinerungen der Querschnittsfläche und damit beim Passieren des Kolbens 14 Druckspitzen ergeben. Die beiden letzten Stopfen 22 wiederum sind viel weiter radial nach außen geschraubt, lassen also Ausnehmungen in der Zylinderwand frei und bilden somit Querschnittflächenvergrößerungen, die in Druckverminderungen resultieren. Eine derartige Ausführung der Arbeitszylinder mit einstellbaren oder veränderlichen Querschnittsflächenveränderungen ist besonders vorteilhaft für Testzwecke oder Prototypen, bei denen etwa noch öfter Änderungen der Codierungen, Abfolge der Zylinderbetätigungen (hier ohne neue Programmierung der Steuereinheit 11 möglich) oder Feinabstimmungen für die absoluten Werte oder Abstände der Druckschwankungen notwendig sind.

Selbstverständlich können die oben beschriebenen Einrichtung zum Bewirken einer Druckmodulierung des Drucks im Druckkreis der Betätigungsanordnung anstelle zwischen Zylinderrohr 15 und Kolben 14 bzw. Dichtung 18 auch alternativ oder zusätzlich zwischen der Kolbenstange 5 und deren Durchführungsöffnung im Arbeitszylinder 1 bis 4 vorgesehen sein. Die zuvor beschriebene beispielhafte Ausführungsform ist dagegen auch besonders für kolbenstangenlose Arbeitszylinder mit anderen Varianten für den Kraftabgriff anwendbar.

Die bisher beschriebenen Ausführungsformen benutzen alle ausschließlich bereits für den hydraulischen Betrieb des Arbeitszylinders notwendige Bauelemente, um die identifizierende bzw. stellungsanzeigende Druckmodulierung zu erzeugen. Es ist aber in vielen Fällen vorteilhaft, den hydraulischen Betrieb des Arbeitszylinders sowenig wie möglich zu beeinflussen, d.h. beispielsweise die Dichtung des Kolbens oder der Kolbenstange sowenig wie möglich mechanischen Belastungen durch Verformung oder Überfahren von Ausnehmungen oder Ausbuchtungen auszusetzen. Daher sind in diesem Fall Ausführungsformen der Erfindung vorteilhaft, die zumindest ein separates Element zur Erzeugung der Druckmodulierung verwenden, das zusätzlich zu den eigentlich hydraulischen wirkenden Elementen wie Kolben, Dichtung od. dgl. vorhanden ist.

Dieses zusätzliche Element als Einrichtung zur Druckmodulierung ist an zumindest einem Bauteil vorgesehen oder damit verbunden, der an zumindest einem anderen Bauteil während des Hubes des Arbeitszylinders vorbeibewegt wird. Vorzugsweise wird dies der Arbeitszylinder, der Kolben oder eine allfällige Kolbenstange sein. Vorteilhafterweise ist als baulich einfache Ausführungsform dieser Variante, die einfach herzustellen und im Betrieb sehr sicher ist, zumindest ein mechanisches Element vorhanden, das in zumindest einem Abschnitt des Hubes des Kolbens im Arbeitszylinder mit zumindest einem vorbeibewegten anderen mechanischen Element und/oder einem speziell ausgebildeten Bereich einer am ersten mechanischen Element anliegenden und vorbeibewegten Fläche zusammenwirkt. Denkbar sind etwa federbelastet vorgespannte, bewegliche Teile, die in Nuten, Bohrungen oder ähnliche Strukturen des vorbeibewegten Bauteils in Art eines Rastmechanismus eingreifen und derart die Bewegung des Kolbens im Arbeitszylinders beeinflussen. Genausogut kann aber alternativ dazu oder zusätzlich einer der relativ aneinander vorbeibewegten Bauteile mit einer Oberflächenstruktur versehen sein, die, wenn der andere Bauteil bzw. das vorgespannte Element diesen Abschnitt überfährt, die Bewegung des Kolbens erleichtert - indem die Oberfläche etwa glatter geschliffen ist - oder erschwert - wenn die Oberfläche aufgerauht ist - und somit die Druckmodulierung bewerkstelligt. Der Vorteil aller dieser Ausführungsformen liegt darin, daß die für die Druckmodulierung wirksamen Strukturen unabhängig von den hydraulisch wirkenden Strukturen ausgelegt und gestaltet sein können. So ist beispielsweise die Federvorspannung für ein mechanisches Element in der Art einer Reibbremse am Kolben oder der Kolbenstange zum Zusammenwirken mit unterschiedlich rauhen Abschnitten an der Zylinderinnenwandung unabhängig von der Kraft, mit der die Kolbendichtung zwischen ihrem Sitz und der Zylinderinnenwandung gepreßt wird. Jeder Bauteil kann somit in seinem optimalen Bereich eingesetzt werden, ohne durch gleichzeitiges Erfüllen mehrerer Aufgaben Kompromisse eingehen zu müssen.

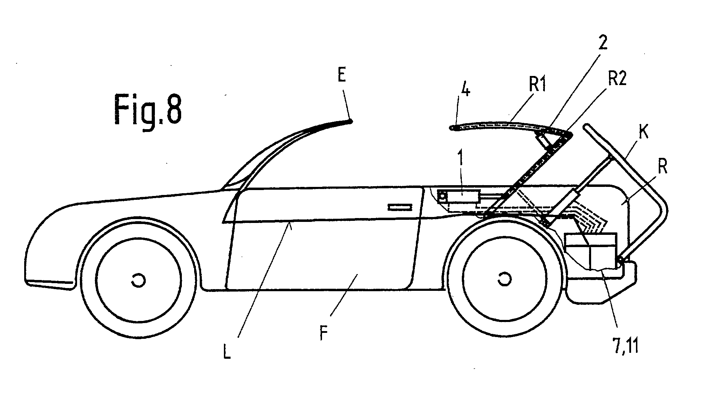

In Fig. 8 ist als ein beispielhafter Anwendungsfall für die erfindungsgemäße Betätigungsanordnung der Fall eines Fahrzeugverdecks schematisch dargestellt. Die Rahmenteile des Verdecks sind mit R1 und R2 bezeichnet, und gegeneinander bzw. gegenüber dem Fahrzeug F durch die Arbeitszylinder 1 und 2 bewegbar. In Ruhestellung ist das Verdeck R1, R2 unter einer Abdeckklappe K geschützt, die über einen dritten Arbeitszylinder 3 betätigbar ist. Weiters ist zumindest ein Arbeitszylinder 4 zur Verriegelung des Verdecks R1 und R2 in der ausgefahrenen Endstellung vorgesehen. Die Arbeitszylinder 1 bis 4 sind in einem gemeinsamen Druckkreis P, der mit einem im Motorraum befindlichen Hydraulikaggregat 7 verbunden ist, welches wieder über eine externe Steuerung 11 in der bereits oben erläuterten Weise angesteuert wird. Beispielhaft ist auch noch ein Endschalter E dargestellt, der das Erreichen der vollständig ausgefahrenen Stellung des Verdecks überwacht und diesen Zustand über die Signalleitung L an die Steuerung 11 meldet.

Bei dem Fahrzeugverdeck ist nun die erfindungsgemäße Betätigungsanordnung mit der Möglichkeit der Überschneidung von Arbeitszyklen der Arbeitszylinder besonders vorteilhaft, weil damit der Vorgang des Ein- und Ausfahrens des Verdecks trotz weiterhin sehr einfacher, kostengünstiger und funktionssicherer Ausführung der Betätigungsanordnung wesentlich beschleunigt werden kann. Es muß vor Betätigung eines Zylinders nicht mehr das Erreichen der Endstellung des vorhergehenden Zylinders abgewartet werden, sondern einander nicht störende Bewegungen können überschneidend oder sogar parallel erfolgen. So können etwa bei noch nicht vollständig aber durch den Zylinder 3 doch schon sehr weit geöffneter Abdeckklappe K die beiden Zylinder 1 und 2 angesteuert werden und das Ausfalten des Verdecks beginnen. Der Zylinder 3 befindet sich in diesem Fall in einem durch einen erfindungsgemäßen Abschnitt mit Querschnittsveränderungen gekennzeichneten Teil seines Arbeitshubs. Umgekehrt kann der Schließvorgang der Klappe K bereits eingeleitet und begonnen werden, auch wenn das Verdeck noch nicht ganz geschlossen ist, sondern sich die Rahmenteile R1 und R2 noch auf dem Weg in die Endstellungund sich die Arbeitszylinder 1 und 2 daher in einer Zwischenstellung, die gleichfalls durch Abschnitte mit Querschnittveränderungen gekennzeichnet sind - befinden, trotzdem aber bereits einen großen Teil des Platzes für die Schwenkbewegung der Klappe K freigegeben haben. Auch eine individuelle Kennzeichnung der einzelnen Zylinder 1 bis 4 durch charakteristische Abfolgen von Abschnitten mit Querschnittsveränderungen als Einrichtungen zur Erzielung einer Druckmodulierung kann vorgenommen werden, so daß die richtige Abfolge der Zylinderbetätigungen überwacht werden kann und nicht etwa durch einen Fehler im System das Auffalten des Verdecks beginnt, bevor noch die Abdekklappe geöffnet ist.

## Patentansprüche

1. Hydraulische Betätigungsanordnung für bewegliche Teile, insbesondere für verschwenkbare Klappen an Fahrzeugen, mit zumindest einem Arbeitszylinder (1 bis 4) mit einem an der Zylinderinnenwand dichtend anliegenden Kolben, einer mit dem oder jedem Arbeitszylinder verbundenen Steuereinheit (11) und einem mit der Steuereinheit verbundenen Drucksensor (12) in einem gemeinsamen Druckkreis, wobei die entsprechend dem Druckverlauf im System veränderten Ausgangssignale des Drucksensors (12) in der Steuereinheit (11) zur Stellungskontrolle des oder jedes Arbeitszylinders (1 bis 4) dienen, **dadurch gekennzeichnet, daß** Einrichtungen zum Bewirken einer Modulierung des Druckes im Arbeitszylinder (1 bis 4) vorhanden sind und die entsprechend der Druckmodulierung veränderten Ausgangssignale des Drucksensors (12) der Steuereinheit (11) zuleitbar sind und zur Stellungskontrolle und/oder Identifizierung des oder jedes Arbeitszylinders (1 bis 4) durch die Steuereinheit (11) dienen.

2. Betätigungsanordnung nach Anspruch 1, **dadurch gekennzeichnet, daß** mehrere, vorzugsweise über separate Schaltelemente (V1 bis V4) ansteuerbare Arbeitszylinder (1 bis 4) im Druckkreis (P) mit der Steuereinheit (11) und dem Drucksensor (12) vorgesehen sind.

3. Betätigungsanordnung nach Anspruch 2, **dadurch gekennzeichnet, daß** zumindest ein Arbeitszylinder (1 bis 4) mit Einrichtungen zur Druckmodulierung für eine diesen Arbeitszylinder aufgrund der speziellen Form der Druckmodulierung charakterisierenden Kennzeichnung ausgestattet ist.

4. Betätigungsanordnung nach einem der Ansprüche 1 bis 3, **dadurch gekennzeichnet, daß** die Einrichtungen zur Druckmodulierung durch zumindest einen Abschnitt (16, 17, 19, D) mit einer gegenüber anderen Abschnitten betragsmäßig abweichenden Querschnittsfläche an zumindest einem von zwei während des Hubes des Kolbens (14) aneinander vorbeibewegten und einander berührenden Teile (14, 15) des Arbeitszylinders (1 bis 4) gebildet sind.

5. Betätigungsanordnung nach Anspruch 4, **dadurch gekennzeichnet, daß** die Abweichung der Querschnittsfläche durch einen Abschnitt (19) mit einer vorzugsweise über den gesamten Umfang des Zylinderrohres (15) und/oder einer allfälligen Kolbenstange (5) umlaufenden Einbuchtung in diese Teile gegeben und der Kolben (14) mit einer am Zylinderrohr (15) anliegenden Dichtung (18) bzw. die Durchführung der Kolbenstange (5) mit einer an der Kolbenstange anliegenden Dichtung versehen ist.

6. Betätigungsanordnung nach Anspruch 5, **dadurch gekennzeichnet, daß** die Einbuchtung in das Zylinderrohr (15) in Richtung des Hubes des Kolbens (14) eine Länge aufweist, die größer ist als die dichtend wirksame Länge des Kolbens (14).

7. Betätigungsanordnung nach Anspruch 4, **dadurch gekennzeichnet, daß** die Abweichung der Querschnittsfläche durch einen Abschnitt (16, 17, 20) mit einer vorzugsweise über den gesamten Umfang des Zylinderrohres (15) und/oder einer allfälligen Kolbenstange (5) umlaufenden Ausbuchtung von diesen Teilen weg gegeben und der Kolben (14) mit einer am Zylinderrohr (15) anliegenden Dichtung (18) bzw. die Durchführung der Kolbenstange (5) mit einer an der Kolbenstange anliegenden Dichtung versehen ist.

8. Betätigungsanordnung nach Anspruch 4, **dadurch gekennzeichnet, daß** die Abweichung der Querschnittsfläche durch zumindest eine Bohrung im Zylinderrohr (15) und/oder einer allfälligen Kolbenstange (5) gegeben ist, in welche Bohrung allenfalls ein Stopfen (21, 22) verstellbar und fixierbar einsetzbar ist und daß der Kolben (14) mit einer am Zylinderrohr (15) anliegenden Dichtung (18) bzw. die Durchführung der Kolbenstange (5) mit einer an der Kolbenstange anliegenden Dichtung versehen ist.

9. Betätigungsanordnung nach einem der Ansprüche 1 bis 3, **dadurch gekennzeichnet, daß** die Einrichtungen zur Druckmodulierung durch zumindest ein, von den Baueilen für den hydraulischen Betrieb der Arbeitszylinder (1 bis 4) separates Element, vorzugsweise am Arbeitszylinder, am Kolben oder der allfälligen Kolbenstange, gebildet sind.

10. Betätigungsanordnung nach Anspruch 9, **dadurch gekennzeichnet, daß** zur Druckmodulierung ein mechanisches Element in zumindest einem Abschnitt des Hubes des Kolbens im Arbeitszylinder mit zumindest einem vorbeibewegten anderen mechanischen Element und/oder einem speziell ausgebildeten Bereich einer am ersten mechanischen Element anliegenden und vorbeibewegten Fläche zusammenwirkt.

11. Betätigungsanordnung nach Anspruch 10, **dadurch gekennzeichnet, daß** mechanische Element zumindest ein gegen das vorbeibewegte Element oder die vorbeibewegte Fläche vorgespanntes Bauteil ist, das in zumindest einem Abschnitt des Hubes des Kolbens mit zumindest einer betragsmäßig abweichenden Querschnittsfläche und/oder einer die Relativbewegung beeinflussenden Oberflächenstruktur zusammenwirkt, derart die Kolbenbewegung erleichtert oder erschwert und somit die Druckmodulierung bewerkstelligt.

12. Betätigungsanordnung nach einem der Ansprüche 1 bis 11, **dadurch gekennzeichnet, daß** die Zylinderwandung (15) und/oder eine allfällige Kolbenstange (5) über ihre Länge in regelmäßigen Abständen mit den Einrichtungen zur Druckmodulierung versehen ist.

13. Betätigungsanordnung nach einem der Ansprüche 1 bis 12, **dadurch gekennzeichnet, daß** zur Überwachung und Auswertung des Druckverlaufes in der Steuereinheit (11) ein Rechner vorgesehen ist, der allenfalls auch die Schaltfolgen der Schaltelemente (V1 bis V4) bei mehreren Arbeitszylindern (1 bis 4) steuert.

14. Betätigungsanordnung nach einem der Ansprüche 1 bis 13, **dadurch gekennzeichnet, daß** zumindest ein Temperatursensor (13), vorzugsweise am oder zumindest in der Nähe des Druckkreises (P), vorgesehen ist, der ebenfalls mit der Steuereinheit (11) in Verbindung steht und über den die Temperaturabhängigkeit der Betätigungsanordnung berücksichtigbar ist.

15. Fahrzeugverdecksystem mit einem vorzugsweise mehrteiligen Rahmenaufbau (R1, R2) und einer allfälligen Abdeckklappe (K) und zumindest einem Arbeitszylinder (1 bis 4) zur relativen Bewegung des Rahmenaufbaus (R1, R2) und der Abdeckklappe (K) gegenüber dem Fahrzeug (F) bzw. zur relativen Bewegung dieser Teile gegeneinander, **dadurch gekennzeichnet, daß** der zumindest eine Arbeitszylinder (1 bis 4) Teil einer Betätigungsanordnung nach einem der vorhergehenden Ansprüche ist.

16. Verfahren zur Stellungskontrolle und/oder Identifizierung eines Arbeitszylinders (1-4) in einer hydraulischen Betätigungsanordnung nach einem der Ansprüche 1 bis 14 für bewegliche Teile, insbesondere für verschwenkbare Klappen an Fahrzeugen, bei welchem der Druck im Druckkreis mit einem Drucksensor (12) ermittelt und ein entsprechendes Signal einer Steuereinheit (11) zur Auswertung zugeleitet wird, **dadurch gekennzeichnet, daß** der Druck im Druckkreis bei Passieren eines vorbestimmten Abschnittes entlang des Hubes des Kolbens (14) in einer diese Stellung und/oder den jeweiligen Zylinder charakterisierenden Weise durch Zusammenwirken von Kolben (14) und Zylinderrohr (15) oder von mit diesen Teilen verbundenen Elementen moduliert wird, daß in einem Drucksensor (12) ein dieser Druckmodulation entsprechendes Signal erzeugt und der Steuereinheit (11) der Betätigungsanordnung zur Auswertung zugeleitet wird.

17. Verfahren nach Anspruch 16, **dadurch gekennzeichnet, daß** der Druck im Druckkreis bei Passieren des vorbestimmten Abschnittes durch Veränderung des Widerstandes der Kolbenbewegung moduliert wird.

18. Verfahren nach Anspruch 16, **dadurch gekennzeichnet, daß** der Druck im Druckkreis bei Passieren des vorbestimmten Abschnittes durch Ableiten eines Teils des Druckfluids, vorzugsweise ein zumindest kurzfristiges Verbinden der Räume vor und hinter dem Kolben, moduliert wird.

## Claims

1. A hydraulic operating arrangement for moving parts, in particular for pivoting flaps on vehicles, with at least one working cylinder (1 to 4) having a piston lying sealed on the inner cylinder wall, a control unit (11) connected to the or each working cylinder and a pressure sensor (12) connected to the control unit in a common pressure circuit, whereby the output signals of the pressure sensor (12) in the control unit (11) modified in the system corresponding to the pressure sequence serve to adjust the position of the or each working cylinder (1 to 4), **characterised in that** there are mechanisms for causing modulation of the pressure in the working cylinder (1 to 4) and the output signals of the pressure sensor (12) modified according to pressure modulation can be sent to the control unit (11) and serve to adjust position and/or identify the or each working cylinder (1 to 4) via the control unit (11).

2. The operating arrangement as claimed in Claim 1, **characterised in that** several working cylinders (1 to 4), preferably controlled via separate switching elements (V1 to V4), are provided in the pressure circuit (P) with the control unit (11) and the pressure sensor (12).

3. The operating arrangement as claimed in Claim 1, **characterised in that** at least one working cylinder (1 to 4) is equipped with mechanisms for pressure modulation for marking, **characterising** this working cylinder on the basis of the special form of pressure modulation.

4. The operating arrangement as claimed in any one of Claims 1 to 3, **characterised in that** the mechanisms for pressure modulation are formed by at least one section (16, 17, 19, D) with a cross-section surface diverging in terms of amount compared to other sections on at least one of two parts (14, 15) of the working cylinder (1 to 4) moving past one another and contacting one another during the stroke of the piston (14).

5. The operating arrangement as claimed in Claim 4, **characterised in that** the divergence of the cross-sectional surface through a section (19) is provided with a depression rotating preferably over the entire periphery of the cylindrical pipe (16) and/or a relevant piston rod (5) into these parts, and the piston (14) is provided with a seal (18) lying on the cylindrical pipe (15) or the bushing of the piston rod (5) is provided with a seal lying on the piston rod.

6. The operating arrangement as claimed in Claim 5, **characterised in that** the depression into the cylindrical pipe (15) in the direction of the stroke of the piston (14) is of a length greater than the effective sealing length of the piston (14).

7. The operating arrangement as claimed in Claim 4, **characterised in that** the divergence of the cross-sectional surface through a section (16, 17, 20) with a bulge rotating preferably over the entire periphery of the cylindrical pipe (15) and/or a relevant piston rod (5) directed away from these parts, and the piston (14) is provided with a seal (18) lying on the cylindrical pipe (15) or the bushing of the piston rod (5) is provided with a seal lying on the piston rod.

8. The operating arrangement as claimed in Claim 4, **characterised in that** the divergence of the cross-sectional surface is made through at least one bore in the cylindrical pipe (15) and/or a relevant piston rod (5), in which bore a stop (21, 22) can be inserted displaceably and fixably, and **in that** the piston (14) is provided with a seal (18) lying on the cylindrical pipe (15) or the bushing of the piston rod (5) is provided with a seal lying on the piston rod.

9. The operating arrangement as claimed in any one of Claims 1 to 3, **characterised in that** the mechanisms for pressure modulation are formed by at least one element separate from the components for hydraulic operation of the working cylinders (1 to 4), preferably on the working cylinder, on the piston or the relevant piston rod.

10. The operating arrangement as claimed in Claim 9, **characterised in that** for pressure modulation a mechanical element in at least one section of the stroke of the piston on the working cylinder cooperates with at least one other mechanical element moved past it and/or a specially designed area of a surface lying on the first mechanical element and moved past it.

11. The operating arrangement as claimed in Claim 10, **characterised in that** the mechanical element is at least a component pretensed against the element moved past or the surface moved past, which cooperates in at least one section of the stroke of the piston with at least one diverging cross-sectional surface and/or a surface structure influencing the relative movement, such that the piston movement is facilitated or impeded and thus causes the pressure modulation.

12. The operating arrangement as claimed in any one of Claims 1 to 11, **characterised in that** the cylinder walls (15) and/or a relevant piston rod (5) is provided over its length at regular distances with the mechanisms for pressure modulation.

13. The operating arrangement as claimed in any one of Claims 1 to 12, **characterised in that** for monitoring and assessing the pressure sequence in the control unit (11) a computer is provided which also controls the switching sequences of the switch elements (V1 to V4) in the case of several working cylinders (1 to 4).

14. The operating arrangement as claimed in any one of Claims 1 to 13, **characterised in that** at least one temperature sensor (13) is preferably provided on or at least in the vicinity of the pressure circuit (P), which is likewise connected to the control unit (11) and via which the temperature dependence of the operating arrangement can be considered.

15. A vehicle covering system with a preferably multipart frame construction (R1, R2) and a relevant cap (K) and at least one working cylinder (1 to 4) for relative movement of the framework (R1, R2) and the cap (K) relative to the vehicle (F) or for relative movement of these parts towards one another, **characterised in that** the at least one working cylinder (1 to 4) is part of an operating arrangement as claimed in any one of the foregoing claims.

16. A method for adjusting the position of and/or identifying a working cylinder (1 to 4) in a hydraulic operating arrangement, as claimed in any one of Claims 1 to 14, for moving parts, in particular for pivoting flaps on vehicles, in which the pressure in the pressure circuit is determined by a pressure sensor (12) and a corresponding signal is sent to a control unit (11) for evaluation, **characterised in that** when a preset section along the stroke of the piston (14) is passed the pressure in the pressure circuit is modulated in a way **characterising** this position and/or the respective cylinder by cooperation of piston (14) and cylindrical pipe (15) or by elements connected to these parts, **in that** a signal corresponding to this pressure modulation is generated in a pressure sensor (12) and is sent to the control unit (11) of the operating arrangement for evaluation.

17. The method as claimed in Claim 16, **characterised in that** when the preset section is passed the pressure in the pressure circuit is modulated by alteration of the resistance of the piston movement.

18. The method as claimed in Claim 16, **characterised in that** when the preset section is passed the pressure in the pressure circuit is modulated by a portion of the pressurised fluid being drawn off, preferably an at least short-term connecting of the chambers in front of and behind the piston.

## Revendications

1. Dispositif d'actionnement hydraulique pour des pièces mobiles, en particulier pour des volets basculants sur des véhicules, comportant au moins un cylindre de travail (1 à 4) avec un piston appliqué avec étanchement contre la paroi intérieure du cylindre, une unité de commande (11) reliée au cylindre ou à chaque cylindre de travail et un détecteur de pression (12), relié à l'unité de commande, dans un circuit de pression commun, les signaux de sortie du détecteur de pression (12) modifiés en correspondance de l'évolution de pression dans le système servant au contrôle de la position du ou de chaque cylindre de travail (1 à 4) dans l'unité de commande (11), **caractérisé en ce qu'**il est prévu des organes pour effectuer une modulation de la pression dans le cylindre de travail (1 à 4), et les signaux de sortie du détecteur de pression (12) modifiés en correspondance de la modulation de pression sont susceptibles d'être amenés à l'unité de commande (11) et servent au contrôle de la position et/ou à l'identification du ou de chaque cylindre de travail (1 à 4) par l'unité de commande (11).

2. Dispositif d'actionnement selon la revendication 1, **caractérisé en ce qu'**il est prévu plusieurs cylindres de travail (1 à 4) susceptibles d'être pilotés de préférence via des éléments de commutation séparés (V1 à V4) dans le circuit de pression (P) avec l'unité de commande (11) et avec le détecteur de pression (12).

3. Dispositif d'actionnement selon la revendication 2, **caractérisé en ce qu'**au moins un cylindre de travail (1 à 4) est équipé d'organes pour la modulation de pression pour une identification caractérisant ce cylindre de travail en raison de la forme spéciale de la modulation de pression.

4. Dispositif d'actionnement selon l'une des revendications 1 à 3, **caractérisé en ce que** les organes pour la modulation de pression sont formés par au moins un tronçon (16, 17, 19, D) avec une surface de section transversale dont la taille diffère par rapport à celle d'autres tronçons sur l'une au moins parmi deux pièces (14, 15) du cylindre de travail (1 à 4) déplacées l'une le long de l'autre et en contact mutuel pendant la course du piston (14).

5. Dispositif d'actionnement selon la revendication 4, **caractérisé en ce que** la différence de la surface de section transversale est définie par un tronçon (19) présentant une cavité périphérique de préférence sur tout le pourtour du tube de cylindre (15) et/ou d'une tige de piston éventuelle (5), ladite cavité étant définie dans ces pièces, et le piston (14) est pourvu d'un joint d'étanchéité (18) appliqué contre le tube de cylindre (15), ou la traversée de la tige de piston (5) est pourvue d'un joint d'étanchéité appliqué contre la tige de piston (5).

6. Dispositif d'actionnement selon la revendication 5, **caractérisé en ce que** la cavité dans le tube de cylindre (15) présente, en direction de la course du piston (14), une longueur qui est supérieure à la longueur à effet d'étanchement du piston (14).

7. Dispositif d'actionnement selon la revendication 4, **caractérisé en ce que** la différence de la surface de section transversale est définie par un tronçon (16, 17, 20) présentant une cavité périphérique de préférence sur tout le pourtour du tube de cylindre (15) et/ou d'une tige de piston éventuelle (5) en éloignement de ces pièces, et le piston (14) est pourvu d'un joint d'étanchéité (18) appliqué contre le tube de cylindre (15), ou la traversée de la tige de piston (5) est pourvue d'un joint d'étanchéité appliqué contre la tige de piston (5).

8. Dispositif d'actionnement selon la revendication 4, **caractérisé en ce que** la différence de la surface de section transversale est définie par au moins un perçage dans le tube de cylindre (15) et/ou dans une tige de piston éventuelle (5), perçage dans lequel tout au plus un bouchon (21, 22) peut être mis en place de façon réglable et fixé, et **en ce que** le piston (14) est pourvu d'un joint d'étanchéité (18) appliqué contre le tube de cylindre (15), ou la traversée de la tige de piston (5) est pourvue d'un joint d'étanchéité appliqué contre la tige de piston.

9. Dispositif d'actionnement selon l'une des revendications 1 à 3, **caractérisé en ce que** les organes pour la modulation de pression sont formés par au moins un élément séparé des composants pour le fonctionnement hydraulique des cylindres de travail (1 à 4), de préférence sur le cylindre de travail, sur le piston ou sur la tige de piston éventuelle.

10. Dispositif d'actionnement selon la revendication 9, **caractérisé en ce que** pour la modulation de pression, un élément mécanique coopère, sur une partie au moins de la course du piston dans le cylindre de travail, avec au moins un autre élément mécanique déplacé le long de celui-ci et/ou avec une zone réalisée spécialement d'une surface appliquée sur le premier élément mécanique et déplacée le long de celui-ci.

11. Dispositif d'actionnement selon la revendication 10, **caractérisé en ce que** l'élément mécanique est au moins un composant précontraint contre l'élément déplacé ou contre la surface déplacée, composant qui coopère, sur une partie au moins de la course du piston, avec au moins une surface de section transversale dont la taille est différente et/ou avec une structure superficielle influençant le mouvement relatif, de telle sorte que le mouvement du piston est facilité ou rendu plus difficile, ce qui effectue la modulation de pression.

12. Dispositif d'actionnement selon l'une des revendications 1 à 11, **caractérisé en ce que** la paroi du cylindre (15) et/ou une tige de piston éventuelle (5) est pourvue, à des distances régulières sur sa longueur, desdits organes pour la modulation de pression.

13. Dispositif d'actionnement selon l'une des revendications 1 à 12, **caractérisé en ce que** pour surveiller et évaluer l'évolution de pression dans l'unité de commande (11), il est prévu un calculateur qui commande le cas échéant également les successions de commutation des éléments de commutation (V1 à V4) dans plusieurs cylindres de travail (1 à 4).

14. Dispositif d'actionnement selon l'une des revendications 1 à 13, **caractérisé en ce qu'**il est prévu au moins un détecteur de température (13) de préférence au niveau ou au moins à proximité du circuit de pression (P), qui est également en liaison avec l'unité de commande (11) et via lequel on peut prendre en compte la dépendance de température du dispositif d'actionnement.

15. Système formant capote de véhicule comportant une structure de cadre (R1, R2) de préférence en plusieurs pièces et un volet de recouvrement éventuel (K) et au moins un cylindre de travail (1 à 4) pour le mouvement relatif de la structure de cadre (R1, R2) et du volet de recouvrement (K) par rapport au véhicule (F) ou pour le mouvement relatif de ces pièces les unes par rapport aux autres, **caractérisé en ce que** ledit au moins un cylindre de travail (1 à 4) fait partie d'un dispositif d'actionnement selon l'une des revendications précédentes.

16. Procédé pour le contrôle de la position et/ou pour l'identification d'un cylindre de travail (1 à 4) dans un dispositif d'actionnement hydraulique selon l'une des revendications 1 à 14 pour des pièces mobiles, en particulier pour des volets basculants sur des véhicules, dans lequel on détecte la pression dans le circuit de pression au moyen d'un détecteur de pression (12) et on amène un signal correspondant à une unité de commande (11) pour l'évaluation, **caractérisé en ce que** la pression dans le circuit de pression est modulée lors du passage d'une partie prédéterminée le long de la course du piston (14) d'une manière caractérisant cette position et/ou le cylindre respectif par coopération du piston (14) et du tube de cylindre (15) ou d'éléments reliés à ces pièces, **en ce que** l'on engendre un signal correspondant à cette modulation de pression dans un détecteur de pression (12) et on l'amène à l'unité de commande (11) du dispositif d'actionnement pour l'évaluation.

17. Procédé selon la revendication 16, **caractérisé en ce que** la pression dans le circuit de pression est modulée, lors du passage d'une partie prédéterminée, par modification de la résistance au mouvement du piston.

18. Procédé selon la revendication 16, **caractérisé en ce que** la pression dans le circuit de pression est modulée, lors du passage de la partie prédéterminée, par dérivation d'une partie du fluide sous pression, de préférence par une liaison au moins brève des chambres en avant et en arrière du piston.
